# EUROPÄISCHE PATENTSCHRIFT

(11) **EP 1 019 752 B1**
(45) Veröffentlichungstag und Bekanntmachung des Hinweises auf die Patenterteilung: **23.07.2003**
(21) Anmeldenummer: 98955376.3
(22) Anmeldetag: 02.10.1998
(51) Int. Cl.: G01T 1/203

(54) **VERFAHREN ZUM BESCHICHTEN DER INNENWAND EINES SCHLAUCHES FÜR EINE DURCHFLUSSSZINTILLATIONSMESSZELLE**
PROCESS FOR COATING THE INTERIOR WALLS OF A HOSE FOR A FLOW-THROUGH SCINTILLATION MEASURING CELL
PROCEDE DE RECOUVREMENT DE LA PAROI INTERIEURE D'UN TUYAU POUR UNE CELLULE DE MESURE A SCINTILLATION PAR ECOULEMENT

(30) Priorität: 04.10.1997 DE 19743862
(43) Veröffentlichungstag der Anmeldung: 19.07.2000
(73) Patentinhaber: Forschungszentrum Jülich GmbH, 52425 Jülich (DE)
(72) Erfinder: ULLRICH, Werner, D-52428 Jülich (DE); WENZEL, Ulrich, D-52428 Jülich (DE)
(86) Internationale Anmeldenummer: DE9802964
(87) Internationale Veröffentlichungsnummer: WO99018453

(56) Entgegenhaltungen:
- EP-A- 0 576 090
- DE-A- 19 613 971
- DE-U- 1 807 591
- FR-A- 1 308 829

## Beschreibung

Die Erfindung bezieht sich auf ein Verfahren zur Herstellung eines Schlauches für Durchflußszintillationsmeßzellen, bei denen das szintillierende Material als dünne Schicht auf der Innenseite eines durchsichtigen oder durchscheinenden, hitzebeständigen Schlauchs aufgetragen ist und fest anhaftet.

Wird eine Flüssigkeit mit gelösten radioaktiven Substanzen durch diesen Schlauch gefördert, erzeugt die radioaktive Strahlung im szintillierenden Material Lichtblitze, die gemessen werden können und dadurch Aufschluß über die Menge oder die Konzentration der radioaktiven Substanzen in der Lösung geben.

Aus der Druckschrift DE-Gm 1 807 591 ist ein Meßkopf bekannt, der als Strahlendetektor für α- oder β-Teilchen eingesetzt wird. Der Meßkopf umfaßt einen spiralförmig gewickelten, schlauchförmigen Szintillator.

Aus der nach dem Prioritätstag veröffentlichten Druckschrift DE 196 13 971 A1 ist als vorveröffentlichter Stand der Technik eine Durchflußszintillationsmeßzelle bekannt, die einen spiralförmig verlaufenden durchsichtigen Schlauch aufweist, in dem sich eine Schüttschicht eines Feststoffszintillators befindet.

Ferner wird in der nach dem Prioritätstag veröffentlichten Druckschrift DE 196 13 971 A1 ein Verfahren zur Herstellung von Meßzellen beschrieben. Schmale Streifen eines schmelzbaren Szintillators (z.B. Meltilex™) werden in einem geeignet hitzebeständigen Schlauch eingebracht, mit Heißluft geschmolzen und dann durch den heißen Luftstrom im Schlauch über seine gesamte Länge verwirbelt. Nach Abkühlung des Schlauchs ist der Szintillator als homogene, fest anhaftende Schicht auf der Innenseite des Schlauchs verteilt.

Dieses Verfahren ist bei Schläuchen mit einem Innendurchmesser kleiner als 1,5 mm nicht mehr erfolgreich, da der Heißluftdurchsatz dann keine ausreichende Verwirbelung mehr bewirkt. Bei Schläuchen mit einem Innendurchmesser von weniger als 1,5 Millimetern ist das szintillierende Material regelmäßig zu dick, um es streifenförmig in den Schlauch einzuführen. Ferner verstopft ein dünner Schlauch sehr leicht, so daß keine Luft mehr hindurchgeleitet werden kann.

Auch ist es beim beschriebenen Verfahren nicht möglich, den zu beschichtenden Schlauch vor dem Einführen von streifenförmigem Material zu krümmen, also z. B. spiralförmig aufzuwickeln. Andernfalls kann das Material regelmäßig nicht mehr eingeführt werden.

Wird der Schlauch im Anschluß an das beschriebene Verfahren spiralförmig gewickelt, so treten mechanische Spannungen zwischen Schlauch und dem aufgebrachten Material auf. Die Spannungen können Schäden zur Folge haben.

Der Einsatz dünner Schläuche ist sehr vorteilhaft bei der Bestimmung α-aktiver Substanzen in Gegenwart β-aktiver Strahler, da die Effizienz (Verhältnis der gemessenen Lichtblitze zu der eingesetzten Aktivität) für α-Teilchen mit dem reziproken Schlauchdurchmesser ansteigt, während die β-Effizienz durchmesserunabhängig ist.

Aufgabe der Erfindung ist es, einen Schlauch mit kleinem Innendurchmesser mit einer fest anhaftenden Szintillatorschicht herzustellen. Aufgabe der Erfindung ist ferner die Bereitstellung einer Durchflußszintillationsmeßzelle.

Die Aufgabe wird gelöst, indem szintillierendes Material zunächst erwärmt und so verflüssigt wird. Anschließend wird der Schlauch mit dem zähflüssigen, szintillierenden Material mittels Druck oder Saugen gefüllt. Da das Material zähflüssig ist, ist z. B. Druck erforderlich, um es in den Schlauch hineinzubringen oder herauszuholen.

Nun wird der Schlauch mit dem szintillierenden Material abgekühlt. Das szintillierende Material kann sich wieder verfestigen.

Ein Durchgang durch den Schlauch wird geschaffen, indem dieser bei Bedarf wieder erwärmt und dabei das szintillierende Material herausgeblasen wird. Es verbleibt ein Rückstand auf der Schlauchinnenwand. Mittels der Temperatur, dem Druck, mit dem Luft durch den Schlauch hindurchgeblasen wird, sowie der Zeit für diesen Vorgang wird die Schichtdicke reguliert. Dünne Filme von weniger als 50 µm Dicke können so hergestellt werden.

Eine Formgebung des Schlauches zu Beginn des Verfahrens ist möglich. Der Schlauch kann z.B. zunächst spiralförmig gewickelt werden. Das Material, mit dem die Innenwand des Schlauches beschichtet wird, setzt sich spannungsfrei an der Innenwand ab. Eine Beschädigung durch nachträgliches Wickeln des Schlauches wird so vermieden.

Alternativ wird in den Schlauch vor dem Befüllen mit dem szintillierenden Material ein Draht hineingeschoben. Anschließend wird der Schlauch mit dem erwärmten, zähflüssigen, szintillierenden Material gefüllt. Durch Abkühlen wird das szintillierende Material verfestigt. Anschließend wird der Draht herausgezogen. Insbesondere Kanäle mit definierter Dicke können so präzise hergestellt werden. Allerdings kann hier die Formgebung des Schlauches erst nach dem Beschichten erfolgen.

In einer vorteilhaften Ausgestaltung der anspruchsgemäßen Verfahren wird der Schlauch während des Befüllens mit dem erwärmten, zähflüssigen Material durch Heizmittel erwärmt. So wird sichergestellt, daß das zähflüssige Material während des Befüllens seine Temperatur beibehält und zähflüssig bleibt.

Mittels der anspruchsgemäßen Verfahren können allgemein beliebig geformte (dünne), ausreichend hitzebeständige Rohre und Schläuche mit Materialien, die durch Temperaturerhöhung zähflüssig werden, innen beschichtet werden. Die anspruchsgemäßen Verfahren werden dabei äquivalent angewendet.

Im folgenden wird das Verfahren anhand von zwei Beispielen näher erläutert. Für beide Varianten wurden hitzebeständige Schläuche aus Teflon, Teflon Copolymeren oder Perfluoralkoxy (PFA) Copolymeren benutzt. Als schmelzbarer Szintillator wurde das Produkt Meltilex der Fa. Wallac Oy, Finland eingesetzt.

Im ersten Fall wird in den Schlauch ein Draht so eingeführt, daß er die Schlauchinnenwand nicht berührt. Ein Schlauchende wird in ein Bad mit geschmolzenem Szintillator getaucht. Gegenüber dem anderen Schlauchende wird eine Druckdifferenz erzeugt, entweder durch einen Überdruck auf das Szintillatorbad oder einen Unterdruck am freien Schlauchende. Das zähflüssige Szintillatormaterial wird in den Schlauch zwischen Draht und Schlauchwand gepreßt oder gesaugt. Dabei wird der Schlauch von außen erwärmt, bis der gesamte Schlauch gefüllt ist. Der gefüllte Schlauch wird danach auf Raumtemperatur abgekühlt. Dabei verfestigt sich der Szintillator wieder. Der Draht wird mechanisch aus dem Schlauch entfernt und hinterläßt einen definierten Kanal. Mit Hilfe des Verfahrens wurden Schläuche bis zu 30 cm Länge beschichtet, wobei ein Kanaldurchmesser bis zu 0.03 cm erzeugt werden konnte.

Bei der zweiten Variante wird das Schlauchende ebenfalls in ein Bad aus geschmolzenen Szintillator getaucht und der Szintillator durch Anlegen einer Druckdifferenz zwischen Bad und freiem Schlauchende in den Schlauch gefüllt. Der Schlauch wird ebenfalls von außen erhitzt. wenn der Schlauch vollständig gefüllt ist, wird das freie Schlauchende mit einer Preßluftleitung verbunden und der flüssige Szintillator mit Hilfe der Preßluft aus dem Schlauch gedrückt. Auch dieser Verfahrensschritt wird durch eine Außenheizung des Schlauchs unterstützt. Im Schlauch verbleibt ein dünner Film an der Innenwand, der nach dem Abkühlen auf Raumtemperatur fest anhaftet. Die Schichtdicke des Szintillators und der sich daraus ergebende Kanaldurchmesser können durch die Außentemperatur und den Preßluftdruck reguliert werden. Je höher die Außentemperatur und/oder der Preßluftdruck ist, desto dünner ist der verbleibende Film. Mit diesem Verfahren wurden u. a. Schläuche mit Innendurchmessern von 0,5 mm bis 0,1 mm (vor Beschichten) bis zu einer Länge von 100 cm innen beschichtet.

Ein wesentlicher Vorteil des Verfahrens besteht darin, daß der unbeschichtete Schlauch zu seiner endgültigen Gestalt (z.B. einer Spirale) verformt und dann beschichtet werden kann. Die Szintillatorschicht bleibt dadurch spannungsfrei.

## Patentansprüche

1. Verfahren zum Beschichten der Innenwand eines durchsichtigen Schlauches mit szintillierendem Material mit den Schritten
- das szintillierende Material wird erwärmt, bis es zähflüssig ist,
- das szintillierende Material wird in den Schlauch hinein gedrückt oder hereingesaugt,
- der Schlauch mit dem szintillierenden Material wird abgekühlt,
- das szintillierende Material wird nach Erwärmung aus dem Schlauch herausgeblasen oder herausgesaugt.

2. Verfahren nach vorhergehendem Anspruch, bei dem der Schlauch vor dem ersten Schritt gekrümmt und zwar insbesondere spiralförmig gekrümmt wird.

3. Verfahren nach einem der vorhergehenden Ansprüche, bei dem der Schlauch während des Herausblasens von szintillierendem Material aus dem Schlauch durch Heizmittel von außen erwärmt wird.

4. Verfahren zum Beschichten der Innenwand eines durchsichtigen Schlauches mit szintillierendem Material mit den Schritten:
- ein Draht wird in den Schlauch so eingeführt, daß dieser die Innenwand nicht berührt,
- das szintillierende Material wird erwärmt, bis es zähflüssig ist,
- das szintillierende Material wird in den Schlauch hineingedrückt oder hereingesaugt,
- der Schlauch mit dem szintillierenden Material wird abgekühlt,
- der Draht wird aus dem Schlauch herausgezogen.

## Claims

1. Process for coating the inner wall of a transparent tube with scintillating material using the steps:
- the scintillating material is heated until it is viscous,
- the scintillating material is pressed or sucked into the tube,
- the tube is cooled with the scintillating material,
- the scintillating material is blown or sucked out of the tube after heating.

2. Process according to the previous claim, in which the tube is bent before the first step particularly in a spiral shape.

3. Process according to one of the previous claims, in which the tube is heated from outside by a means of heating whilst the scintillating material is blown out of the tube.

4. Process of coating the inside wall of a transparent tube with scintillating material using the steps:
- a wire is put into the tube so that it does not touch the inner wall,
- the scintillating material is heated until it is viscous,
- the scintillating material is pressed or sucked into the tube,
- the tube is cooled with the scintillating material,
- the wire is pulled out of the tube.

## Revendications

1. Procédé de revêtement de la paroi intérieure d'un tuyau souple et transparent d'une matière de scintillation comprenant les stades :
- on réchauffe la matière de scintillation jusqu'à ce qu'elle soit visqueuse,
- on refoule ou on aspire la matière de scintillation dans le tuyau souple,
- on refroidit le tuyau souple ayant la matière de scintillation,
- on fait sortir après réchauffement la matière de scintillation du tuyau souple par soufflage ou par aspiration.

2. Procédé suivant la revendication précédente, dans lequel le tuyau souple est incurvé avant le premier stade et de fait notamment, est incurvé sous la forme d'une spirale.

3. Procédé suivant l'une des revendications suivantes, dans lequel on chauffe de l'extérieur par des moyens de chauffage le tuyau souple pendant que l'on en fait sortir par soufflage la matière de scintillation.

4. Procédé de revêtement de la paroi intérieure d'un tuyau souple et transparent de matière de scintillation comprenant les stades :
- on introduit un fil métallique dans le tuyau souple de façon à ce qu'il ne touche pas la paroi intérieure,
- on réchauffe la matière de scintillation jusqu'à ce qu'elle soit visqueuse,
- on refoule ou on aspire la matière de scintillation dans le tuyau souple,
- on refroidit le tuyau souple ayant la matière de scintillation,
- on retire le fil du tuyau souple.
